# DEMANDE DE BREVET EUROPEEN

(11) **EP 0 911 940 A1**
(43) Date de publication de la demande: **28.04.1999**
(21) Numéro de dépôt: 98402437.2
(22) Date de dépôt: 05.10.1998
(51) Int. Cl.: H02J 7/00, H01M 10/48

(54) **Circuit d'adaptation de charge pour accumulateur ou batterie**

(30) Priorité: 23.10.1997 FR 9713288
(71) Demandeur: ALCATEL, 75008 Paris (FR)
(72) Inventeur: Maloizel, Serge, 16730 Trois Palis (FR)
(74) Mandataire: Laroche, Danièle

(57) **Abrégé**

L'invention concerne un circuit d'adaptation de la tension de charge pour un accumulateur, comprenant des bornes (2, 3) de connexion d'un accumulateur, reliées à des bornes de sortie (6, 7), une résistance variable (8) montée entre une des bornes de connexion (2; 3) et une des bornes de sortie (6; 7), et des moyens de comparaison (10) montés entre les bornes de connexion commandant la résistance variable en fonction des résultats de la comparaison de la tension entre les bornes de connexion et une tension nominale.

Elle concerne aussi une batterie comprenant au moins un accumulateur et un tel circuit.

Application à l'adaptation des accumulateurs, notamment des accumulateurs au lithium, à des chargeurs présentant une tension de charge supérieure à la tension de charge nominale de l'accumulateur.

## Description

La présente invention a pour objet un circuit d'adaptation de charge pour accumulateur; elle concerne également une batterie contenant un tel circuit d'adaptation de charge.

Les accumulateurs, et notamment les accumulateurs Li-ion trouvent un emploi croissant dans nombre de dispositifs domestiques et bureautiques, et notamment dans les téléphones portables. La tension de charge de tels dispositifs est classiquement de 4,2 volts, et les chargeurs classiques pour ce type d'accumulateur sont habituellement prévus pour une tension de charge correspondante. Sont récemment apparus des variantes d'accumulateurs au lithium dont la tension de charge est de 4,1 volts ou 4,0 volts.

Il existe des dispositifs de charge dits "universels", permettant de charger divers types d'accumulateur; ces dispositifs présentent des molettes de réglage et ne peuvent pas identifier le type d'accumulateur auquel ils sont connectés. Il existe encore des dispositifs de charge pouvant reconnaître le type d'accumulateur auquel ils sont branchés; ces dispositifs sont compliqués et coûteux.

L'invention a pour but de résoudre le problème nouveau de charge de différents accumulateurs à l'aide d'un même chargeur, et notamment le problème de charge des batteries lithium à tension de charge de 4,2, 4,1 et 4,0 volts à l'aide des chargeurs existants à 4,2 volts.

La présente invention propose une solution originale et simple à ce problème. Elle fournit une solution à bas prix, aisément adaptable à tous les types d'accumulateurs.

Plus précisément, l'invention propose un circuit d'adaptation de la tension de charge pour un accumulateur, comprenant des bornes de connexion d'un accumulateur, reliées à des bornes de sortie, une résistance variable montée entre une des bornes de connexion et une des bornes de sortie, et des moyens de comparaison montés entre les bornes de connexion commandant la résistance variable en fonction des résultats de la comparaison de la tension entre les bornes de connexion et d'une tension nominale.

De préférence, les moyens de comparaison commandent la résistance variable de sorte à ce que la tension entre les bornes de connexion soit égale à la tension nominale.

Avantageusement, le circuit comprend une diode montée en parallèle à la résistance variable, la diode étant passante de la borne de connexion vers la borne de sortie.

Dans un mode de réalisation, la résistance variable est constituée d'un transistor, de préférence d'un transistor MOSFET.

Les moyens de comparaison peuvent comprendre un amplificateur opérationnel comparant la tension entre les bornes de connexion et la tension fournie par une source de tension.

Ils peuvent aussi comprendre un diviseur de tension branché entre les bornes de connexion, une source de tension, et un amplificateur opérationnel comparant la tension fournie par le diviseur de tension et la tension fournie par la source de tension.

L'invention concerne aussi une batterie comprenant au moins un accumulateur et un circuit d'adaptation de la tension de charge, le circuit comprenant des bornes de connexion reliées aux bornes du ou des accumulateurs, reliées à des bornes de sortie, une résistance variable montée entre une des bornes de connexion et une des bornes de sortie, et des moyens de comparaison montés entre les bornes de connexion commandant la résistance variable en fonction des résultats de la comparaison de la tension entre les bornes de connexion et d'une tension nominale.

Avantageusement, la tension nominale est la tension nominale de charge de l'accumulateur.

Le circuit d'adaptation est de préférence un circuit intégré monté sur un boîtier de la batterie.

Dans un mode de réalisation, les moyens de comparaison commandent la résistance variable de sorte à ce que la tension entre les bornes du ou des accumulateurs soit égale à la tension nominale.

Dans un autre mode de réalisation, le circuit comprend une diode montée en parallèle à la résistance variable, la diode étant passante de la borne de connexion vers la borne de sortie.

Avatageusement, la résistance variable est constituée d'un transistor, de préférence d'un transistor MOSFET.

Les moyens de comparaison peuvent comprendre un amplificateur opérationnel comparant la tension entre les bornes du ou des accumulateurs et la tension fournie par une source de tension. Ils peuvent aussi comprendre un diviseur de tension branché entre les bornes de connexion, une source de tension, et un amplificateur opérationnel comparant la tension fournie par le diviseur de tension et la tension fournie par la source de tension.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'un circuit d'adaptation de la tension de charge selon l'invention;
- figure 2, une représentation schématique d'un mode de réalisation d'un circuit d'adaptation de la tension de charge selon l'invention;
- figure 3, une représentation schématique d'un autre mode de réalisation d'un circuit d'adaptation de la tension de charge selon l'invention;
- figure 4, une représentation d'une batterie selon l'invention.

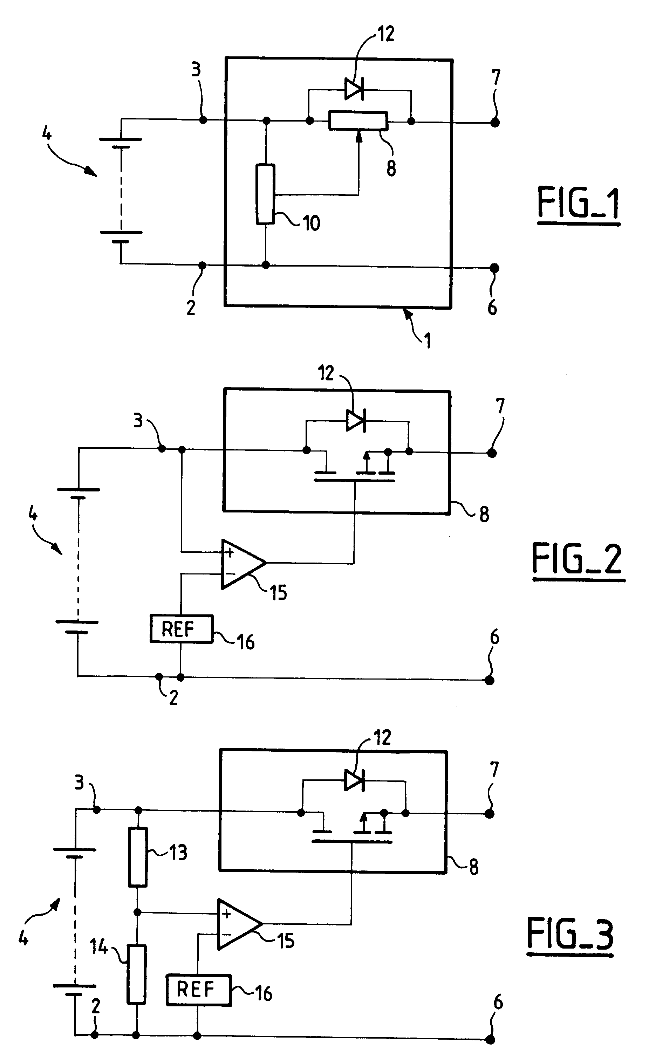

La figure 1 montre une représentation schématique d'un circuit 1 d'adaptation de la tension de charge selon l'invention. Ce circuit permet d'adapter à un accumulateur la tension de charge d'un chargeur présentant une tension de charge supérieure à la tension de charge nominale de l'accumulateur.

Le circuit présente deux bornes 2 et 3, dites bornes de connexion, destinées à être reliées respectivement aux bornes négative et positive d'un accumulateur 4, et deux bornes 6 et 7, dites borne de sortie, destinées à être reliées respectivement aux bornes négative et positive d'un chargeur non représenté sur la figure. Le circuit présente entre les bornes 3 et 7 une résistance variable 8; il présente entre les bornes 2 et 3, i. e. en parallèle à l'accumulateur, des moyens 10 de comparaison de la tension aux bornes de l'accumulateur et de la tension de charge adaptée à l'accumulateur; en fonction des résultats de la comparaison, les moyens de comparaison commandent la résistance variable 8.

Le fonctionnement du circuit de la figure 1 est le suivant; lorsque l'accumulateur 4 et le chargeur sont respectivement branchés aux bornes du circuit 1, les moyens de comparaison comparent la tension aux bornes de l'accumulateur à la tension de charge nominale de l'accumulateur; en fonction des résultats de la comparaison, ils commandent la valeur de la résistance variable 8; l'application de la résistance variable 8 permet de faire diminuer la tension aux bornes de l'accumulateur pour qu'elle prenne la valeur de la tension nominale de charge. Ainsi, tout au long de la charge de l'accumulateur, et quelque soit le courant de charge, la tension aux bornes de l'accumulateur reste inférieure ou égale à la tension de charge nominale.

A titre d'exemple, on considère le cas d'un chargeur délivrant une tension de charge de 4,2 volts, et d'un accumulateur fonctionnant sous une tension de 4,1 volts; le courant de charge dans ce cas varie typiquement entre 0,005 et 2 ampères. La résistance variable 8 peut varier entre 0 et 20 ohms, de sorte à induire une chute de tension de 0,1 volts.

Le circuit de la figure 1 permet, à la charge de l'accumulateur, d'appliquer à celui-ci une tension de charge correcte. Il n'influence ni le temps, ni le courant de charge. Le circuit peut s'adapter aux modèles d'accumulateur existants, et ne nécessite pas de prévoir sur ceux-ci une broche supplémentaire pour l'identification de l'accumulateur, ou pour permettre une charge et une décharge séparées.

La taille du circuit de la figure 1 permet de l'implanter sur le boîtier d'un accumulateur, de sorte à pouvoir adapter l'accumulateur à un chargeur fonctionnant à une tension supérieure à la tension de charge nominale de l'accumulateur. Dans le mode de réalisation de la figure 3, le circuit d'adaptation ne présente qu'une taille de 1 cm² sur 1,75 mm d'épaisseur.

Dans ce cas, le circuit 1 présente avantageusement, en parallèle à la résistance variable 8, une diode 12 montée de sorte à permettre le passage du courant s'écoulant depuis la borne 3 vers la borne 7. Après avoir chargé l'accumulateur, à l'aide du circuit d'adaptation de la figure 1, on peut brancher directement le dispositif à alimenter aux bornes 6 et 7 du circuit d'adaptation : l'accumulateur se décharge alors normalement, à travers la diode 12; celle-ci n'induit qu'une chute de tension minimale.

Le circuit peut aussi fonctionner sans la diode 12, dans la mesure où la tension de décharge de l'accumulateur est sensiblement inférieure à la tension nominale de charge; de ce fait, dès le début de la décharge, les moyens de comparaison règlent la résistance variable à une valeur faible ou nulle. La chute de tension à travers la résistance variable est alors minimale.

L'invention permet de fournir des batteries ou accumulateurs de types différents, avec un modèle de chargeur unique, en assurant néanmoins que les différents accumulateurs sont chargés à la tension de charge nominale.

La figure 2 montre une représentation schématique d'un autre mode de réalisation d'un circuit d'adaptation de la tension de charge selon l'invention; les références identiques à celles de la figure 1 désignent les mêmes éléments, qui ne sont pas décrits de nouveau. Comme le montre la figure 2, les moyens de comparaison comprennent un amplificateur opérationnel 15, et une tension de référence 16; la borne non-inverseuse de l'amplificateur 15 est relié à la borne 3 reliée à la borne positive de l'accumulateur; l'entrée inverseuse de l'amplificateur est reliée à la borne positive de la tension de référence 16. La borne négative de la tension de référence est reliée à la borne 4 reliée à la borne négative de l'accumulateur. La borne de sortie de l'amplificateur opérationnel est reliée à la résistance variable 8. Ainsi, les moyens de comparaison sont montés en parallèle à l'accumulateur et comprennent un amplificateur opérationnel monté en comparateur, en série avec une source tension fournissant la tension nominale de charge de l'accumulateur. Cette source de tension peut être constituée par un dispositif semi-conducteur connu en soi, qui se polarise à la tension nominale de charge de l'accumulateur.

La résistance variable 8 peut par exemple être constituée par un transistor, par exemple un transistor MOSFET. La taille du transistor est adaptée à la chute de tension souhaitée, et au courant fourni par le chargeur. Un transistor MOSFET est particulièrement avantageux, dans la mesure où la diode 12 est intégrée au transistor et ne doit pas être rajoutée.

La figure 3 montre une représentation schématique d'un autre mode de réalisation d'un circuit d'adaptation de la tension de charge selon l'invention. De nouveau, les références identiques à celles des figures 1 et 2 désignent les mêmes éléments, qui ne sont pas décrits de nouveau. Le circuit de la figure 3 est identique à celui de la figure 2, à celà près que l'entrée non-inverseuse de l'amplificateur opérationnel est reliée à la borne de connexion 3, non pas directement, mais par l'intermédiaire d'un pont de résistances agissant comme diviseur de tension. Plus précisément, deux résistances 13 et 14 en série sont montées entre les bornes de connexion, et l'entrée non-inverseuse de l'amplificateur opérationnel est reliée entre les deux résistances 13 et 14. Le montage de la figure 3 compare la tension fournie par la référence 16 au produit de la tension entre les bornes de connexion par un facteur R₁₄/(R₁₃ + R₁₄), R₁₃ et R₁₄ étant les valeurs des résistances 13 et 14.

Le fonctionnement du circuit de la figure 3 est analogue à celui du circuit de la figure 2. Toutefois, la présence des résistances présente les avantages suivants. D'une part, il est possible d'utiliser le même montage pour des valeurs différentes de la tension nominale de charge de l'accumulateur: il suffit alors de faire varier les valeurs relatives des deux résistances, sans qu'il soit nécessaire de modifier la source de tension. D'autre part, le montage de la figure 3 permet d'utiliser une source de tension 16 courante, qui délivre une tension de 1,25 ou de 2,5 volts; des choix appropriés des résistances 13 et 14 permettent d'ajuster la tension nominale de charge de l'accumulateur.

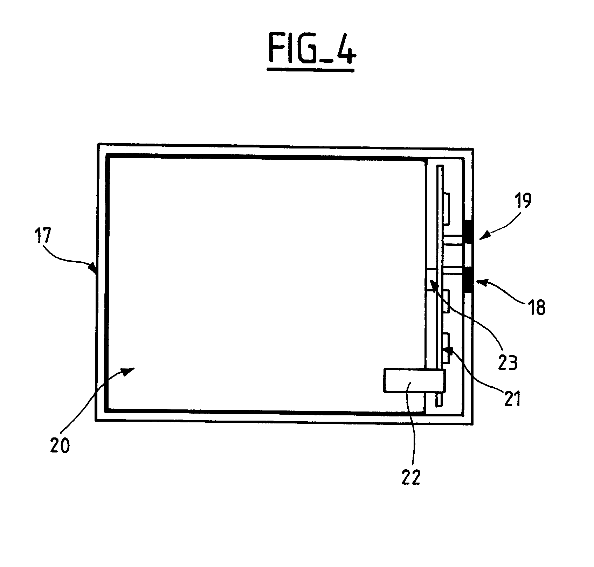

La figure 4 montre un schéma d'une batterie selon l'invention, ouverte, qui comprend un circuit d'adaptation de charge selon l'invention, et, dans l'exemple de la figure, un accumulateur unique.

La figure 4 montre le boîtier 17 de la batterie, avec ses deux bornes 18 et 19. Dans le boîtier de la batterie sont disposés un accumulateur 20 et un circuit d'adaptation de la charge 21. Les bornes de sortie 6 et 7 du circuit d'adaptation de charge sont respectivement reliées aux bornes 18 et 19 de la batterie; les bornes de connexion du circuit sont reliées aux bornes de l'accumulateur. Sur la figure apparaît la une borne de connexion du circuit d'adaptation de charge, qui est reliée au godet de l'accumulateur par un cavalier soudé 22. L'autre borne de connexion est reliée au pôle situé sur le dessus de l'accumulateur, comme le montre le contact 23. Le choix de la borne de connexion dépend du type d'accumulateur, avec pôle négatif ou positif au godet. Le circuit et l'accumulateur sont montés dans le boîtier de la batterie par collage ou par toute technique analogue. Il est clair que l'on peut de la même façon prévoir plusieurs accumulateurs en série dans une batterie. Enfin, certaines batteries au lithium présentent des circuits de protection: on peut dans ce cas intégrer le circuit d'adaptation de charge de l'invention avec ou sur le circuit de protection déjà existant.

Bien entendu, la présente invention n'est pas limitée aux exemples et modes de réalisation décrits et représentés, mais elle est susceptible de nombreuses variantes accessibles à l'homme de l'art. Ainsi, il est clair que dans le mode de réalisation de la figure 1, comme dans celui de la figure 2, la résistance variable pourrait aussi bien être disposée entre les bornes 2 et 6, sans que le fonctionnement du circuit ne soit modifié. De façon analogue, on pourrait brancher l'entrée inverseuse de l'amplificateur à la source de tension de référence à travers un montage diviseur de tension: l'ensemble de la source et du diviseur de tension formerait un source de tension de référence facilement ajustable.

Enfin, l'invention a été décrite dans le cas de batteries Li-ion à tension de charge de 4,2, 4,1 et 4,0 volts. Elle s'applique à d'autres valeurs de tension de charge et à d'autres types de batteries.

## Revendications

1. Un circuit d'adaptation de la tension de charge pour un accumulateur, comprenant des bornes (2, 3) de connexion d'un accumulateur, reliées à des bornes de sortie (6, 7), une résistance variable (8) montée entre une des bornes de connexion (2; 3) et une des bornes de sortie (6; 7), et des moyens de comparaison (10) montés entre les bornes de connexion commandant la résistance variable en fonction des résultats de la comparaison de la tension entre les bornes de connexion et d'une tension nominale.

2. Un circuit selon la revendication 1, caractérisé en ce que les moyens de comparaison commandent la résistance variable de sorte à ce que la tension entre les bornes de connexion soit égale à la tension nominale.

3. Un circuit selon la revendication 1 ou 2, caractérisé par une diode (12) montée en parallèle à la résistance variable, la diode étant passante de la borne de connexion vers la borne de sortie.

4. Un circuit selon l'une des revendications 1 à 3, caractérisé en ce que la résistance variable est constituée d'un transistor, de préférence d'un transistor MOSFET.

5. Un circuit selon l'une des revendications 1 à 4, caractérisé en ce que les moyens de comparaison comprennent un amplificateur opérationnel (15) comparant la tension entre les bornes de connexion et la tension fournie par une source de tension (16).

6. Un circuit selon l'une des revendications 1 à 4, caractérisé en ce que les moyens de comparaison comprennent un diviseur de tension (13, 14) branché entre les bornes de connexion, une source de tension (16), et un amplificateur opérationnel (15) comparant la tension fournie par le diviseur de tension et la tension fournie par la source de tension (16).

7. Une batterie comprenant au moins un accumulateur et un circuit d'adaptation de la tension de charge, le circuit comprenant des bornes (2, 3) de connexion reliées aux bornes du ou des accumulateurs, reliées à des bornes de sortie (6, 7), une résistance variable (8) montée entre une des bornes de connexion (2; 3) et une des bornes de sortie (6; 7), et des moyens de comparaison (10) montés entre les bornes de connexion commandant la résistance variable en fonction des résultats de la comparaison de la tension entre les bornes de connexion et d'une tension nominale.

8. Une batterie selon la revendication 7, caractérisée en ce que la tension nominale est la tension nominale de charge de l'accumulateur.

9. Une batterie selon la revendication 7 ou 8, caractérisée en ce que le circuit d'adaptation est un circuit intégré monté sur un boîtier de la batterie.

10. Une batterie selon l'une des revendications 7, 8 ou 9, caractérisée en ce que les moyens de comparaison commandent la résistance variable de sorte à ce que la tension entre les bornes du ou des accumulateurs soit égale à la tension nominale.

11. Une batterie selon l'une des revendications 7 à 10, caractérisée en ce que le circuit comprend une diode (12) montée en parallèle à la résistance variable, la diode étant passante de la borne de connexion vers la borne de sortie.

12. Une batterie selon l'une des revendications 7 à 11, caractérisée en ce que la résistance variable est constituée d'un transistor, de préférence d'un transistor MOSFET.

13. Une batterie selon l'une des revendications 7 à 12, caractérisée en ce que les moyens de comparaison comprennent un amplificateur opérationnel (15) comparant la tension entre les bornes du ou des accumulateurs et la tension fournie par une source de tension (16).

14. Une batterie selon l'une des revendications 7 à 13, caractérisée en ce que les moyens de comparaison comprennent un diviseur de tension (13, 14) branché entre les bornes de connexion, une source de tension (16), et un amplificateur opérationnel (15) comparant la tension fournie par le diviseur de tension et la tension fournie par la source de tension (16).
